# EUROPEAN PATENT APPLICATION

(11) **EP 3 159 835 A1**
(43) Date of publication of application: **26.04.2017**
(21) Application number: 16194605.8
(22) Date of filing: 19.10.2016
(51) Int. Cl.: G06Q 10/08

(54) **DYNAMIC COUNTING METHOD AND APPARATUS**

(30) Priority: 19.10.2015 US 201514886484
(71) Applicant: Checkpoint Systems, Inc., Thorofare, NJ 08086 (US)
(72) Inventor: Gregory, Jonathan, Windsor, CT 06095 (US)
(74) Representative: Ström & Gulliksson AB

(57) **Abstract**

In one embodiment, the method can include receiving a first plurality of unique identifiers from a first plurality of RFID tags; associating a subset of the unique into a collection of associated identifiers, the collection having a total number of associated identifiers; receiving a second plurality of unique identifiers from a second plurality of RFID tags; determining a total number of the associated identifiers present in the second plurality of unique identifiers; determining that the total number of the associated identifiers present in the second plurality of unique identifiers is greater than or equal to a predetermined number; upon so determining, determining that the total number of the associated identifiers present in the second plurality of unique identifiers is less than or equal to a predetermined percentage of the total number of associated identifiers of the collection; and providing a notice of an error.

## Description

### BACKGROUND

It is important for retailers to have accurate inventory information regarding items in their stores to ensure they have the correct number of items available to sell to customers. In some cases, it is also important for retail stores to have accurate inventory within specific locations in their stores. For example, an accurate total store inventory may be used to determine when items should be ordered from sources external to the store (e.g., from distribution centers, direct from vendors, or from third party logistic providers). Within the store, an accurate inventory in a selling floor location may be used to determine when items should be moved from a backroom to the selling floor location so that the items are available for customers to purchase.

Retailers typically count items within various store locations to establish accurate inventory at a point in time. The retailers then track items exiting and entering the store location to keep a current idea of their inventory relative to the known value when the full count was conducted. However, inventory errors tend to accumulate over time due to multiple factors, including theft, errors in correctly identifying items entering and leaving the location, and errors in correctly counting items entering and leaving the location. Accordingly, inventory accuracy decreases over time.

New technologies such as radio frequency identification (RFID) can improve store inventory. Typically, stores deploying RFID use handheld RFID readers to read tagged items in what is called a cycle count. But sometimes the store employee fails to read all the tags intended to be read during a cycle count. For example, the store employee may read all the tags in a jeans section, but forget to read tags on jeans hanging on a rack. Thus, even technologies such as RFID are vulnerable to inventory errors when thorough cycle counts are not performed. Thus, there is a need to ensure that cycle counts and other methods of counting tags are thoroughly conducted, and that inventory information is accurate and easily accessible.

### BRIEF SUMMARY

The present disclosure is directed to a method and a reader. In one aspect, the method can include receiving a first plurality of unique identifiers from a first plurality of radio frequency identification (RFID) tags; associating a subset of the unique identifiers of the first plurality of unique identifiers into a collection of associated identifiers, the collection of associated identifiers having a total number of associated identifiers; receiving a second plurality of unique identifiers from a second plurality of RFID tags; determining a total number of the associated identifiers present in the second plurality of unique identifiers; determining that the total number of the associated identifiers present in the second plurality of unique identifiers is greater than or equal to a predetermined number; upon determining that the total number of the associated identifiers present in the second plurality of unique identifiers is greater than or equal to the predetermined number, determining that the total number of the associated identifiers present in the second plurality of unique identifiers is less than or equal to a predetermined percentage of the total number of associated identifiers of the collection; and providing a notice of an error.

In another aspect, the method can include receiving a first plurality of unique identifiers from a first plurality of tags; associating a subset of the unique identifiers of the first plurality of unique identifiers into a collection of associated identifiers, the collection of associated identifiers having a total number of associated identifiers; receiving a second plurality of unique identifiers from a second plurality of tags; determining a total number of the associated identifiers present in the second plurality of unique identifiers; determining that the total number of the associated identifiers present in the second plurality of unique identifiers is greater than or equal to a predetermined number; upon determining that the total number of the associated identifiers present in the second plurality of unique identifiers is greater than or equal to the predetermined number, determining that the total number of the associated identifiers present in the second plurality of unique identifiers is less than or equal to a predetermined percentage of the total number of associated identifiers of the collection; and providing a notice of an error.

In yet another aspect, the apparatus can include at least one antenna configured to: transmit a first signal to a first plurality of RFID tags; receive a first plurality of unique identifiers from the first plurality of RFID tags; transmit a second signal to a second plurality of RFID tags; receive a second plurality of unique identifiers from the second plurality of RFID tags; and a processor operably coupled to the at least one antenna, the processor configured to: associate a subset of the unique identifiers of the first plurality of unique identifiers into a collection of associated identifiers, the collection of associated identifiers having a total number of associated identifiers; determine a total number of the associated identifiers present in the second plurality of unique identifiers; determine that the total number of the associated identifiers present in the second plurality of unique identifiers is greater than or equal to a predetermined number; upon determining that the total number of the associated identifiers present in the second plurality of unique identifiers is greater than or equal to the predetermined number, determine that the total number of the associated identifiers present in the second plurality of unique identifiers is less than or equal to a predetermined percentage of the total number of associated identifiers of the collection; and generate an instruction to provide a notice of an error.

Further areas of applicability of the present device and system will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The device and system of the present disclosure will become more fully understood from the detailed description and the accompanying drawings, wherein:
Fig. 1 is a system according to one embodiment.
Fig. 2 is a block diagram of a system according to one embodiment.
Fig. 3 is a flow chart of a method according to one embodiment.
Fig. 4A is a sales floor according to one embodiment.
Fig. 4B is a graph of tags read over time according to one embodiment.

### DETAILED DESCRIPTION

The following description of the preferred embodiment(s) is merely exemplary in nature and is in no way intended to limit the invention or inventions described herein. The description of illustrative embodiments is intended to be read in connection with the accompanying drawings, which are to be considered part of the entire written description. In the description of the exemplary embodiments disclosed herein, any reference to direction or orientation is merely intended for convenience of description and is not intended in any way to limit the scope of the present disclosure. Relative terms such as "lower," "upper," "horizontal," "vertical," "above," "below," "up," "down," "left," "right," "top," "bottom," "front" and "rear" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," "secured" and other similar terms refer to a relationship wherein structures are secured or attached to one another either directly or indirectly through intervening structures, as well as both movable or rigid attachments or relationships, unless expressly described otherwise. The discussion herein describes and illustrates some possible non-limiting combinations of features that may exist alone or in other combinations of features. Furthermore, as used herein, the term "or" is to be interpreted as a logical operator that results in true whenever one or more of its operands are true.

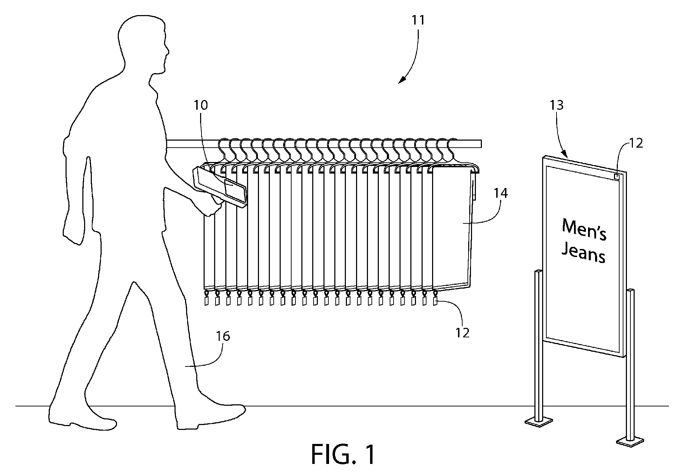

Fig. 1 shows a system 11 according to one embodiment. In the exemplified embodiment, the system 11 includes a handheld RFID reader 10 carried by a user 16. The reader 10 can read RFID tags 12 attached to products 14. Each tag 12 has a unique identifier that can be associated with the product 14 to which the tag 12 is attached. In this embodiment, the tags 12 are attached to products 14 hung on a rack in a store. The system can also include an e-sign 13 (or electronic sign) to which a tag 12 is attached.

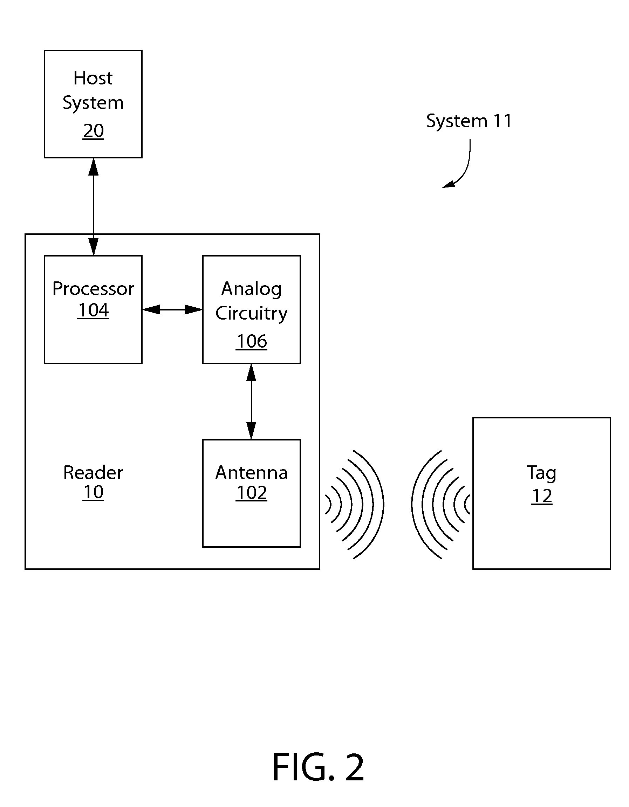

Fig. 2 provides a block diagram of the system 11 according to one embodiment. The reader 10 includes an antenna 102 that can send a modulated backscatter signal to the tags 12, and can receive in response a unique identifier from each tag 12 within the read range of the reader 10. This process can be repeated for subsequent cycle counts. The tags 12 in this embodiment are passive RFID tags and the unique identifier is an electronic product code (EPC). The reader 10 can further include analog circuitry 106 operably coupled to the antenna 102 for processing signals received from the antenna 102 or a processor 104, and for providing signals to the antenna 102 and processor 104.

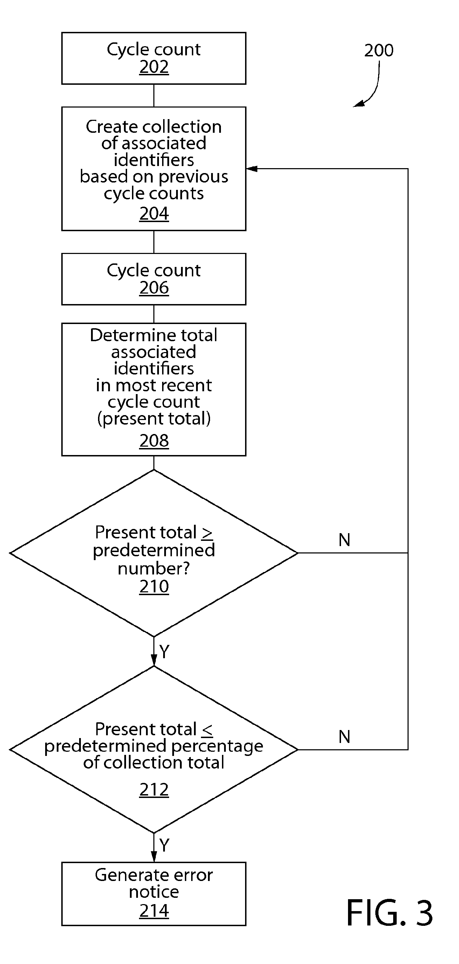

The processor 104 of the reader 10 can be operably coupled to the antenna 102 and the analog circuitry 106. In the exemplified embodiment, the antenna 102, analog circuitry 106, and processor 104 are in a single housing, though in other embodiments these components can be in separate housings. The processor 104 can also be operably coupled to a host system 20 to which the processor 104 can provide data, and from which the processor 104 can receive data. In some embodiments, portions of the processor 104 can be located with the reader 10 while other portions are located with the host system 20 or elsewhere. The host system 20 can provide instructions, as well as processing ability not available on the reader 10. The functions that can be performed by the processor 104 will be discussed in further detail below with reference to Fig. 3. The processor 104 may be any type of properly programmed processing device, such as a computer or microprocessor, configured for executing computer program instructions (e.g., code). The processor 104 may be embodied in hardware of any suitable type and may include all the usual ancillary components necessary to form a functional data processing device including without limitation a bus, software and data storage such as volatile and non-volatile memory, input/output devices, graphical user interfaces (GUIs), removable data storage, and wired and/or wireless communication interface devices including Wi-Fi, Bluetooth, LAN, etc. The processor 104 is configured with specific algorithms to for carrying out its functions.

The reader 10 and system 11 are not limited to the above embodiment. In other embodiments, the reader 10 can be any device capable of electronically receiving a unique identifier from a tag 12 and processing the unique identifiers as described herein. In one example, the reader 10 can be stationary and non-handheld. Further, the system 11 can use an identification technology other than RFID, such as barcode technology. The term "RFID tag" can refer to passive, active, or semi-passive RFID tags, or any other type of tag using radio frequency identification. In other embodiments, the system 11 can use non-RFID tags, or any device capable of electronically providing a unique identifier. The unique identifier can be any identifier capable of uniquely identifying the tag 12 with which it is associated. Further, the tags 12 can be attached to any objects, or no objects at all. Further, the reader 10 can use more than one antenna 102 to provide necessary communication. Further, the system 11 need not use modulated backscatter, but can use any communication technology sufficient to communicate unique identifiers.

Fig. 3 shows a method 200 for detecting an error according to one embodiment. The exemplified method 200 concerns RFID cycle counting, though, as discussed above, other technologies can be used. Initially, a cycle count is performed (operation 202). The cycle count of operation 202 can comprise reading a plurality of tags and thereby receiving a plurality of corresponding unique identifiers.

Further, a collection of associated identifiers is created. The associated identifiers are a subset of the unique identifiers previously received from the tags. The associated identifiers can be associated based on a number of factors. In one embodiment, identifiers can be associated with each other based on time. For example, in a store setting, if a group of identifiers are read or received at a similar time, this can be indicative that the identifiers are associated with related products. In another embodiment, the identifiers can be associated based on an attribute code that forms part of each of the associated identifiers. For example, the identifiers can be EPC codes, and the attribute code can be a portion of the EPC code that refers to a certain product category.

In one example, a first cycle count reads 1100 tags having 1100 unique EPC codes (where the EPC codes are identifiers). Of the 1100 EPC codes of the first cycle count, 100 of those EPC codes are associated with each other to form a defined collection, thus causing a collection of 100 associated identifiers corresponding with 100 unique EPC codes. In this example, the 100 EPC codes of the collection correspond with 100 unique items that are within a common product category, e.g., jeans, and may therefore be referred to as the jeans collection.

Returning to Fig. 3, after a collection of associated identifiers is created (operation 204), a second cycle count is conducted (operation 206). The second cycle count can be conducted in an area similar to where the first cycle count was conducted. As with the first cycle count, the second cycle count can be any method of electronically obtaining unique identifiers from tags.

The processor can determine which, if any, of the associated identifiers (those identifiers associated after the first cycle count) are present in the second cycle count, and thereby determine a total number of associated identifiers that are present in the second cycle count ("the present total") (operation 208). In this operation, the processor can review each of the identifiers read during the second cycle count and then compare these second cycle count identifiers to the collection of associated identifiers.

The processor can determine whether the present total (the total number of associated identifiers that are present in the second cycle count) is greater than or equal to a predetermined number (operation 210). This operation can be used to determine whether the second cycle count was intended to read the associated identifiers of the collection. For example, if a first cycle count was performed on a first side of a store, and a second cycle count was conducted on an opposite side of the store, there may be no associated identifiers (from the first cycle count) read during the second cycle count. In this case, there is no need to compare data from the second cycle count to the collection of associated identifiers from the first cycle count. In an exemplified embodiment, the predetermined number can be set to one as an initialization operation when initially defining the collection of associated identifiers. Thus, if one or more associated identifiers are found in the identifiers of the most recent cycle count, then this condition is satisfied. If zero associated identifiers are found in the identifiers of the most recent cycle count, then this condition is not satisfied, and the process can return to operation 204.

If the condition of operation 210 is satisfied, the processor can make a determination based on the total number of associated identifiers in the collection (sometimes referred to as "the collection total"). In the exemplified embodiment, the processor determines whether the present total (the total number of associated identifiers present in the second cycle count) is less than, or equal to, a predetermined percentage of the collection total (operation 212). The collection total can represent the total number of products in, for example, a certain product category, as based on an earlier cycle count (or counts). The predetermined percentage can be related to the percentage of those products the store expects to still be in its inventory when the next cycle count (the current, most recent cycle count) is performed.

Returning to the earlier example where 100 associated identifiers were read in the first cycle count to form a jeans collection, a week has passed since the first cycle count. A second cycle count is performed in which 1000 tags are read. Of those 1000 tags read during the second cycle count, 90 of the 100 associated identifiers were read. Thus, the present total (the total number of the associated identifiers present in the second cycle count) is 90. In this example, the remaining 10 associated identifiers were not read in the second cycle count, perhaps because the associated items were sold, misplaced, or stolen. In this example, the predetermined number is 1. Thus, if 1 or more associated identifiers are read, this condition is satisfied, thus indicating that the cycle count intended to include a cycle count of the tags associated with the jeans collection. Since 90 (the present total) is greater than 1 (the predetermined number), this condition is satisfied.

In this example, based on historical data (which can include actual sales, restocking, and/or shrink data), the store expects that more than 80% of those previously read jean tags (i.e., a tag that was included in the jeans collection of tags) are still in the store (20% of the jeans having been sold or accounted for in shrink, shrink referring to the loss of a product that can no longer be sold due to for example, theft, damage, or a general inability to locate the product). As discussed above, since the reader read a jean tag in the second cycle count, the system assumes the reader is performing a cycle count that includes the jeans collection. In this example, the system expects the reader to read more than 80 jean tags (80 representing the 80% of the 100 total associated identifiers in the collection). If the total associated identifiers of the collection (i.e., identifiers of tags in the jeans collection) present in the current (second) cycle count (the present total) is less than or equal to 80, this indicates that the most recent cycle count failed to thoroughly read all the previously associated tags in the jeans collection and an incomplete cycle count of the jeans collection has occurred. For example, a store employee may have read the tags of the jeans in the jeans section but neglected to read the tags of the jeans on the racks. Such an event can cause significant errors in inventory management. The system provides a method for identifying such ineffective cycle counts.

If the conditions of operations 210 and 212 are satisfied, a notice of an error can be provided (operation 214). The notice can be any type of notice (e.g., an electronic notice), including a message to a user interface of the reader or host system, or an audible sound. Upon notice of the error or incomplete cycle count, the user can take remedial measures-including, for example, performing a new, more thorough cycle count.

On the other hand, if conditions of operation 210 or 212 are not satisfied, then an error notice is not provided, and the data from the recent cycle count can be used to update the collection data. Returning to the jeans example discussed above, if the total associated identifiers for the jeans collection present in the current cycle is zero, then it may be assumed that the cycle count was not intended to include the tags of the jeans collection, and an error notice is not provided. Further, if the total associated identifiers for the jeans collection present in the current cycle (the present total) is 90 (which is greater than 80), this indicates the most recent cycle count thoroughly read the previously associated tags of the jeans.

The method by which the associated identifiers of the collection are associated is not limited to the foregoing embodiments. The associated identifiers can be associated by any number of factors sufficient for creating a sub-collection of identifiers. Some example factors will be discussed below. In addition, examples may include two, or more than two, cycle counts, as well as associated identifiers being associated based on two or more cycle counts.

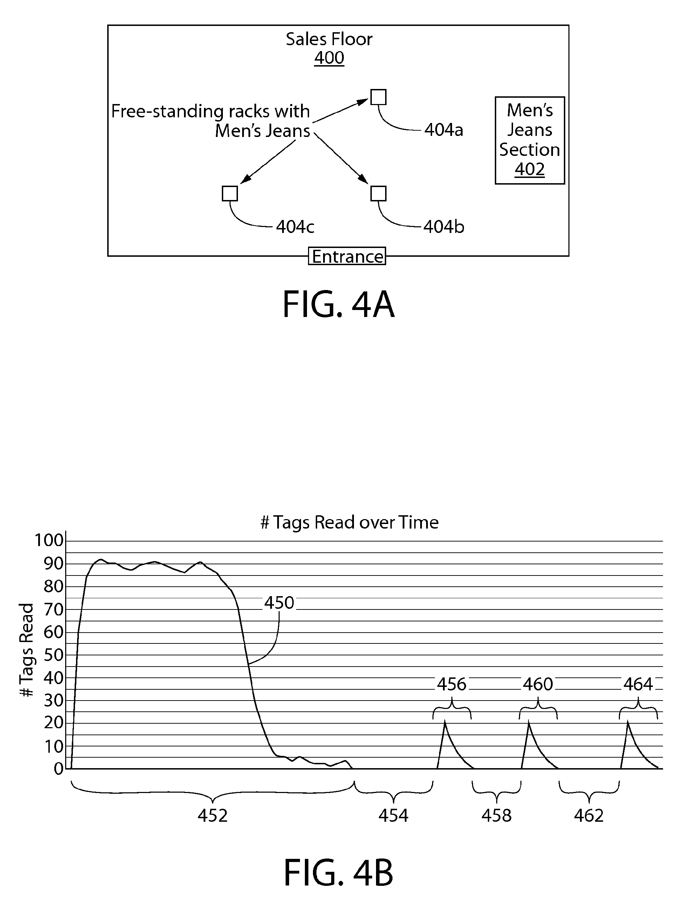

Fig. 4A shows an embodiment of a sales floor 400 for utilizing the method and reader. In this embodiment, the areas of the sales floor 400 having men's jeans items are illustrated. The men's jeans items are located in the men's jeans section 402 and at three free-standing racks 404a, 404b, 404c. It is to be understood that items can be organized on a sales floor 400 in any number of ways.

Fig. 4B shows a graph of men's jeans tags read over time, represented by line 450. As can be seen, at time period 452, a continuous, large number of tags are read at the outset, which eventually tapers off. This represents the tags read in the men's jeans section 402. At time period 454, no tags are read, representing the reader moving to a first rack 404a. At time periods 456, a short burst of tags are read, representing the tags read at the first rack 404a. At time period 458, no tags are read, representing the reader moving to a second rack 404b. At time period 460, another short burst of tags are read, representing the tags read at the second rack 404b. At time period 462, no tags are read, representing the reader moving to a third rack 404c. At time period 464, a last burst of tags are read, representing the tags read at the third rack 404c. The tag identifiers and associated receipt times can be recorded and this information can be used to associate identifiers into a collection.

The exemplified method 200 can use the reading times or identifier receipt times for the respective tags to create a collection of associated identifiers. For example, the method 200 can associate identifiers because their read times correspond with the activity pattern discussed above (large number of reads followed by three short bursts). Then, if in a subsequent cycle count jeans section 402, rack 404a, and rack 404b are read, but rack 404c is omitted, the system will recognize that a significant number of associated jeans tags were not read (the present total number of tags from the jeans collection read during the subsequent cycle count is less than an expected percentage of the collection total) and indicate that an error or incomplete cycle count has occurred.

In other embodiments, the identifiers can be associated into collections based on other time-related factors. For example, the identifiers can be associated based simply on whether the tags were read in succession and/or within a predetermined period of time, or based on different activity patterns of reads and/or breaks in reads. The reading time or receipt time can refer to any time associated with the time when the tag at issue was read or its unique identifier was received.

The associated identifiers of the collection can also (or alternatively) be associated based on an attribute code that forms part of each of the associated identifiers. In one such embodiment, each tag will have an EPC code. The EPC code will include an attribute code, the attribute code referring to a particular product category. Certain tags will share a common attribute code. When a cycle count is performed, the processor will identify those tags having a common attribute code and thereby group the tags' EPC codes (identifiers) into a collection. Accordingly, EPC codes of a common product category will be associated together in a collection. This attribute code-based association can be combined with the time-based association discussed above. For example, tag identifiers can be associated if they share an attribute code and they were read within a predetermined period of time. An attribute code is not limited to EPC codes and can be any identifier forming part of a tag's unique identifier. Further, the attribute code can be associated with any characteristic of a product or the tag itself. For example, the attribute code can be associated with the product category of men's blue jeans, such that all tags for men's blue jeans in a store have a common attribute code as part of their unique identifier.

The associated identifiers of the collection can also (or alternatively) be associated based on an e-sign or electronic sign. Returning to Fig. 1, an e-sign is shown to which a tag 12 is attached. An e-sign can be a stationary sign or other stationary object to which a tag is attached. The system can initially associate tags that are read at a time proximate to when the e-sign tag is read. By this means, tags near the e-sign can be associated. Further, the system can filter out tags based on product stockkeeping units or SKUs. That is, the e-sign identifier can initially be associated with one or more product SKUS, and each tag identifier can be associated with a product SKU. After the initial collection of identifiers is made, the system can remove those tag identifiers from the collection of associated identifiers whose product SKU does not correspond with one of the product SKUs associated with the e-sign. By using e-sign and SKU-based consideration, for example, in addition to time, certain difficulties can be overcome. For example, tags for unrelated products can be located close to each other, and therefore read at a similar time. By filtering based on SKU, for example, in addition to time, it can be better ensured that the identifiers in a collection are related. Further, this method adapts well to new tags being entered into the system (and into the store). As new tags are introduced, the new tag identifiers can be associated with the appropriate SKU without need to update information associated with the e-sign (the e-sign will continue to be associated with the same SKUs). The e-sign identifier will therefore be associated with those new identifiers that are associated with the same SKU. In some circumstances, this may be easier than associating the e-sign directly with EPC codes, where the system would need to update the EPC codes associated with the e-sign every time a new tag entered the system. In other embodiments, the association of identifiers can further be based on an attribute code.

The disclosed embodiments provide several advantages. In addition to providing error or incomplete cycle count notices, the embodiments can indicate exactly which identifiers from a collection were not present in the most recent cycle count. Further, the embodiments have the ability to handle a large number of identifiers, and can provide a notice when a section of identifiers (such as a rack of men's jeans as in Fig. 4A) has been missed. Further, the embodiments have the ability to learn activity patterns and adapt to different store layouts and newly added items, as opposed to other, more labor-intensive methods. The above embodiments can also be used to report inventory results to the reader, host system, or elsewhere, for detecting and remedying shortages, or for other purposes.

The above embodiments can also be used to provide information to consumers. For example, if a consumer in a store was using a store-related smartphone app, a transceiver connected to an e-sign could send a signal to the consumer's smartphone providing notice of products nearby and offering coupons or providing other offers based on the known inventory for the relevant product.

While the disclosure has been described with respect to specific examples, those skilled in the art will appreciate that there are numerous variations and permutations of the above described disclosure. It is to be understood that other embodiments may be utilized and structural and functional modifications may be made without departing from the scope of the present disclosure. Thus, the spirit and scope should be construed broadly as set forth in the appended claims.

## Claims

1. A method comprising:
receiving a first plurality of unique identifiers from a first plurality of radio frequency identification (RFID) tags;
associating a subset of the unique identifiers of the first plurality of unique identifiers into a collection of associated identifiers, the collection of associated identifiers having a total number of associated identifiers;
receiving a second plurality of unique identifiers from a second plurality of RFID tags;
determining a total number of the associated identifiers present in the second plurality of unique identifiers;
determining that the total number of the associated identifiers present in the second plurality of unique identifiers is greater than or equal to a predetermined number;
upon determining that the total number of the associated identifiers present in the second plurality of unique identifiers is greater than or equal to the predetermined number, determining that the total number of the associated identifiers present in the second plurality of unique identifiers is less than or equal to a predetermined percentage of the total number of associated identifiers of the collection; and
providing a notice of an error.

2. The method of claim 1, wherein the receiving of the first plurality of unique identifiers forms part of a first cycle count, and the receiving of the second plurality of unique identifiers forms part of a second cycle count.

3. The method of claim 1, wherein the predetermined number is one.

4. The method of claim 1, wherein the associated identifiers of the collection are associated based on receipt times from the receiving of the first plurality of unique identifiers.

5. The method of claim 4, wherein the receipt times of the associated identifiers occur within a predetermined period of time.

6. The method of claim 4, wherein the receipt times of the associated identifiers occur in succession.

7. The method of claim 4, wherein the receipt times of the associated identifiers occur according to an activity pattern, the activity pattern including breaks in receipt times.

8. The method of claim 4, wherein the receipt times of the associated identifiers occur before a break in the receiving of the first plurality of unique identifiers or after a break in the receiving of the first plurality of unique identifiers.

9. The method of claim 1, wherein the associated identifiers of the collection are associated based on an attribute code that forms part of each of the associated identifiers.

10. The method of claim 9, wherein the associated identifiers of the collection are associated based also on receipt times from the receiving of the first plurality of unique identifiers, or wherein the attribute code is associated with a product category.

11. The method of claim 1, wherein the associated identifiers of the collection are associated based on (a) receipt times from the receiving of the first plurality of unique identifiers; (b) a time associated with reading a stationary tag on a stationary object; and (c) a stock keeping unit (SKU).

12. The method of claim 11, wherein the receipt times of the associated identifiers occur within a predetermined time of the time associated with the reading of the tag on the stationary object, or wherein the associated identifiers of the collection are associated based also on an attribute code that forms part of each of the associated identifiers.

13. An RFID reader comprising:
at least one antenna configured to:
transmit a first signal to a first plurality of RFID tags;
receive a first plurality of unique identifiers from the first plurality of RFID tags;
transmit a second signal to a second plurality of RFID tags;
receive a second plurality of unique identifiers from the second plurality of RFID tags; and
a processor operably coupled to the at least one antenna, the processor configured to:
associate a subset of the unique identifiers of the first plurality of unique identifiers into a collection of associated identifiers, the collection of associated identifiers having a total number of associated identifiers;
determine a total number of the associated identifiers present in the second plurality of unique identifiers;
determine that the total number of the associated identifiers present in the second plurality of unique identifiers is greater than or equal to a predetermined number;
upon determining that the total number of the associated identifiers present in the second plurality of unique identifiers is greater than or equal to the predetermined number, determine that the total number of the associated identifiers present in the second plurality of unique identifiers is less than or equal to a predetermined percentage of the total number of associated identifiers of the collection; and
generate an instruction to provide a notice of an error.

14. The reader of claim 13, wherein the antenna and the processor are enclosed by a housing.

15. The reader of claim 13, wherein the associated identifiers of the collection are associated based on receipt times from the receiving of the first plurality of unique identifiers.
